# EUROPÄISCHE PATENTANMELDUNG

(11) **EP 4 538 202 A1**
(43) Veröffentlichungstag der Anmeldung: **16.04.2025**
(21) Anmeldenummer: 23203451.2
(22) Anmeldetag: 13.10.2023
(51) Int. Cl.: B65G 13/11

(54) **VORRICHTUNG ZUM BEFÖRDERN VON PALETTEN ENTLANG EINER FÖRDEREBENE IN EINER FÖRDERRICHTUNG UND VERFAHREN ZUM BEFÖRDERN VON PALETTEN MITTELS DER VORRICHTUNG**

(71) Anmelder: Lidl Stiftung & Co. KG, 74172 Neckarsulm (DE)
(72) Erfinder: PFEIFFER, Christian, 74081 Heilbronn (DE)
(74) Vertreter: Weickmann & Weickmann PartmbB

(57) **Zusammenfassung**

Die Erfindung betrifft eine Vorrichtung zum Befördern von Paletten (P) entlang einer Förderebene (FE) in einer Förderrichtung (FR), wobei die Vorrichtung mehrere Förderrollen (2) umfasst, welche die Förderebene (FE) definieren, die Vorrichtung wenigstens eine Auftritteinrichtung (3) mit einer Auftrittfläche (4) zum Betreten durch wenigstens einen Fuß eines Menschen aufweist, und die Auftritteinrichtung derart angeordnet ist, dass sich zumindest die Auftrittfläche oberhalb der Förderebene befindet. Die Auftritteinrichtung ist derart von den Förderrollen beabstandet, dass sie keinen Kontakt mit den Förderrollen hat und dadurch keine reibungsbedingte Bremswirkung auf die Förderrollen ausübt. Die Auftritteinrichtung weist Abmessungen auf, die so bemessen sind, dass sie zwischen benachbarte Kufen der Palette passt und von der sich in Förderrichtung bewegenden Palette überfahrbar ist.

## Beschreibung

### I. Anwendungsgebiet

Die vorliegende Erfindung betrifft eine Vorrichtung zum Befördern von Paletten entlang einer Förderebene in einer Förderrichtung sowie ein Verfahren zum Befördern von Paletten mittels der Vorrichtung. Bei den Paletten kann es sich beispielsweise um herkömmliche Europaletten oder sogenannte Halbpaletten (halbe Europaletten) handeln.

### II. Technischer Hintergrund

Vorrichtungen zum Befördern von Paletten entlang einer Förderebene in einer Förderrichtung kommen vielfach zur Anwendung. Sie weisen eine Vielzahl von Förderrollen auf, die drehbar gelagert sind und sich horizontal erstrecken. Jede Förderrolle weist eine mantelerzeugende Gerade auf, die an der vertikal obersten Stelle ihres Querschnitts verläuft. Die Vielzahl dieser mantelerzeugenden Geraden spannt eine Ebene auf, welche die Förderebene im Sinne der vorliegenden Erfindung bildet. Die Förderebene wird somit von einer Tangentialebene gebildet, welche die Förderrollen entlang der jeweiligen mantelerzeugenden Geraden berührt.

Vorrichtungen mit Rollenbahnen zum Befördern von Paletten werden insbesondere dort eingesetzt, wo Ladungsträger mit Abmessungen wie zum Beispiel denjenigen von Europaletten (vgl. DIN EN 13698) oder denjenigen von Halbpaletten (vgl. EP 2 722 285 B1) kraftbetrieben oder mittels Schwerkraft befördert werden. Die Rollenbahnen können abhängig von der verwendeten Palette oder aus anderen Gründen je nach Ausführung unterschiedliche Abmessungen aufweisen, beispielsweise unterschiedliche Abstände der Förderrollen und/oder unterschiedliche Durchmesser der Förderrollen.

Die Rollenbahnen größerer Förderanlagen müssen von Personal häufig überquert werden. Dies ist beispielsweise dann der Fall, wenn die Rollenbahnen Arbeitsplätze umgeben oder Wartungsbereiche für das Wartungspersonal zugänglich sein müssen.

Um dem Personal die Überquerung einer Rollenbahn zu ermöglichen, ist es bekannt, zwischen benachbarten Förderrollen und unterhalb der Förderebene liegende, betretbare Füllbleche zwischen den Förderrollen anzuordnen. Das Personal kann derartige Füllbleche mit den Füßen betreten und die Rollenbahn in Querrichtung überschreiten.

Betretbare Füllbleche der vorgenannten Art müssen aus Gründen der Arbeitssicherheit eine Mindestauftrittsbreite von 0,1 m aufweisen. Insbesondere für den prozesssicheren Transport von Halbpaletten ist ein verhältnismäßig kleiner Abstand der Förderrollen voneinander erforderlich, welcher das Einhalten der Mindestauftrittsbreite von 0,1 m für das betretbare Füllblech nicht ermöglicht.

Füllbleche, die schmaler sind als die Mindestauftrittsbreite von 0,1 m, gefährden das die Rollenbahn überquerende Personal beispielsweise durch die Gefahr des Umknickens eines Fußgelenks oder die Gefahr von Fehltritten. Füllbleche zwischen benachbarten Förderrollen können zur Vergrößerung ihrer möglichen Auftrittsbreite nicht über die Förderebene hinausragend angeordnet werden, da dann die Paletten gegen die Füllbleche fahren und an diesen hängen bleiben würden.

### III. Darstellung der Erfindung

### a) Technische Aufgabe

Es ist daher die Aufgabe der vorliegenden Erfindung, eine Vorrichtung zum Befördern von Paletten entlang einer Förderebene in einer Förderrichtung sowie ein Verfahren zum Befördern von Paletten mittels der Vorrichtung zu schaffen, welche bzw. welches ein sicheres Überqueren der von den Förderrollen gebildeten Rollenbahn durch Personal gewährleistet, ohne das bestimmungsgemäße Befördern der Paletten in der Förderrichtung zu behindern.

### b) Lösung der Aufgabe

Diese Aufgabe wird mittels einer Vorrichtung mit den Merkmalen des Anspruchs 1 und mittels eines Verfahrens mit den Merkmalen des Anspruchs 15 gelöst. Weitere Ausgestaltungen der vorliegenden Erfindung ergeben sich aus den Unteransprüchen.

Erfindungsgemäß wird eine Vorrichtung zum Befördern von Paletten entlang einer Förderebene in einer Förderrichtung vorgeschlagen. Die Paletten können während des Beförderns mit Ware beladen oder unbeladen sein. Die Vorrichtung umfasst mehrere bzw. eine Vielzahl von drehbaren Förderrollen, welche die Förderebene definieren. Dabei können die Förderrollen aktiv drehantreibbar sein oder nur passiv drehbar gelagert sein. Denkbar ist auch, dass einige der Förderrollen aktiv drehantreibbar sind und andere Förderrollen passiv drehbar gelagert sind.

Die Vorrichtung weist des Weiteren wenigstens eine Auftritteinrichtung mit einer Auftrittfläche zum Betreten durch wenigstens einen Fuß eines Menschen auf. Die Auftritteinrichtung ist derart angeordnet, dass sich zumindest ihre Auftrittfläche oberhalb der Förderebene befindet.

Erfindungsgemäß wird vorgeschlagen, die Auftritteinrichtung derart von den Förderrollen beabstandet anzuordnen, dass sie keinen Kontakt mit den Förderrollen hat und dadurch keine reibungsbedingte Bremswirkung auf die Förderrollen ausübt. Darüber hinaus weist die Auftritteinrichtung Abmessungen auf, die so bemessen sind, dass sie zwischen benachbarte Kufen der Palette passt und von der sich in Förderrichtung bewegenden Palette überfahrbar ist.

Der Vorteil der erfindungsgemäßen Vorrichtung besteht darin, dass die Auftritteinrichtung permanent montiert bleiben kann, obwohl sie eine oberhalb der Förderebene befindliche Auftrittfläche aufweist. Die Auftritteinrichtung bildet einen dauerhaften Bestandteil der Vorrichtung zum Befördern von Paletten. Sie kann während des Beförderns von Paletten entlang der Förderebene in der Förderrichtung an Ort und Stelle verbleiben. Die Abmessungen der Auftritteinrichtung sind im Hinblick auf die zu befördernden Paletten derart ausgelegt, dass die Palette die Auftritteinrichtung überfahren kann, ohne dass dabei der tragende Kontakt zwischen den Kufen der Palette und den Förderrollen verloren geht.

Ein weiterer Vorteil der erfindungsgemäßen Vorrichtung besteht darin, dass Form und Größe der Auftrittfläche vollkommen unabhängig von dem Abstand zwischen benachbarten Förderrollen gestaltet werden können. Bei der Gestaltung der Auftrittfläche können somit an diese gestellte Sicherheitsanforderungen wie beispielsweise eine Mindestauftrittsbreite besser erfüllt werden.

Vorzugsweise weist die Auftrittfläche eine längliche Form auf, deren Längsachse vorzugsweise in Richtung der Förderrichtung verläuft. Dies ermöglicht es in vorteilhafter Weise, dass der die Förderrollen überquerende Mensch seine Füße dabei quer zu der Laufrichtung nicht - wie bei den im Stand der Technik bekannten Füllblechen, die zwischen den Förderrollen und unterhalb der Förderebene angeordnet sind - in dem durch den Rollenabstand vorgegebenen Füllblechabstand setzen muss, sondern die Schritte seiner Füße wie beim normalen Gehen mit seinem individuell bequemen Abstand quer zur Laufrichtung setzen kann.

Die längliche Form der Auftrittfläche weist eine in der Förderrichtung gemessene Länge und eine quer zu der Förderrichtung gemessene Breite auf. In vorteilhafter Weise ist das Verhältnis der Länge zu der Breite der länglichen Form der Auftrittfläche gleich oder größer drei.

In vorteilhafter Weise kann die Auftritteinrichtung zumindest in demjenigen Bereich bzw. an demjenigen Ende, welcher bzw. welches einer sich ihr in der Förderrichtung nähernden Palette zugewandt ist, zu der Förderrichtung geneigte Führungskanten aufweisen, die als Einfädelhilfe für die Kufen der Palette dienen. Dies hat den Vorteil, dass Paletten, die sich der Auftritteinrichtung mit einem gewissen Versatz quer zu der Förderrichtung nähern, von den Führungskanten gleichsam eingefangen und quer zu der Förderrichtung relativ zu der Auftritteinrichtung ausgerichtet werden. Dabei können die Führungskanten geradlinig oder kurvenförmig gekrümmt verlaufen. Auch einfache Radien an den Ecken des vorgenannten Bereiches bzw. des vorgenannten Endes der Auftritteinrichtung sind als Führungskanten denkbar, wobei die Stirnseite des betroffenen Bereiches bzw. Endes im Übrigen im rechten Winkel zu der Förderrichtung verläuft.

In vorteilhafter Weise umfasst die Auftritteinrichtung an ihren beiden, in Förderrichtung verlaufenden Seitenrändern jeweils ein Seitenteil, welches von der Auftrittfläche abgewandt in Richtung der Förderrollen ragt und mehrere kreissegmentförmige Aussparungen aufweist. Diese Aussparungen sind dazu ausgelegt, jeweils eine Förderrolle kontaktlos und teilweise derart aufzunehmen, dass einem versehentlichen Einziehen einer Hand oder eines Fingers und einem Einziehen von Gegenständen zwischen die Seitenteile einerseits und die Förderrollen andererseits entgegengewirkt wird. Die kreisbogenartigen Spalte, die zwischen den Förderrollen und den Seitenteilen verbleiben, sind dementsprechend deutlich weniger breit als ein menschlicher Finger dick ist.

Zwischen benachbarten Förderrollen ist jeweils ein Zwischenraum vorhanden. In diesem Zwischenraum ist unterhalb der Förderebene jeweils ein leistenartiges Füllstück ohne Kontakt mit den Förderrollen angeordnet, welches den Zwischenraum im Wesentlichen verschließt. Auch der Abstand des Füllstückes von den zu ihm benachbarten Förderrollen ist vorzugsweise deutlich kleiner als ein menschlicher Finger dick ist.

In vorteilhafter Weise befindet sich zwischen benachbarten Aussparungen der Seitenteile jeweils ein Fußbereich der Seitenteile, der auf dem jeweiligen Füllstück zwischen zwei benachbarten Führungsrollen aufsteht.

Die Seitenteile der Auftritteinrichtung, die Förderrollen und die Füllstücke schirmen somit den Raum unterhalb der Auftrittfläche und zwischen den beiden Seitenteilen nahezu hermetisch ab. Der vorgenannte Raum ist lediglich über die kreisbogenartigen Spalte zwischen den Förderrollen und den Seitenteilen sowie über die geradlinig verlaufenden Spalte zwischen den Förderrollen und den Füllstücken mit der Umgebung verbunden.

In vorteilhafter Weise weist die Vorrichtung einen die Förderrollen tragenden Rahmen auf, wobei die Auftritteinrichtung direkt oder indirekt an dem Rahmen befestigt ist. Dabei können in vorteilhafter Weise die vorgenannten Füllstücke an dem Rahmen und die Auftritteinrichtung an wenigstens zwei Füllstücken befestigt sein. Die Auftritteinrichtung ist dann indirekt an dem Rahmen befestigt.

Die Vorrichtung ist in vorteilhafter Weise auf einem Untergrund aufstellbar und die Auftritteinrichtung kann alternativ zu einer direkten oder indirekten Befestigung an dem Rahmen an dem Untergrund befestigbar sein.

In vorteilhafter Weise kann die Auftrittfläche rutschhemmende Vorsprünge aufweisen. Alternativ oder zusätzlich kann auf der Auftrittfläche eine rutschhemmende Beschichtung aufgebracht sein. Des Weiteren kann die Auftrittfläche in vorteilhafter Weise schräg zu einer Laufrichtung, in welcher sie überschritten wird, in einer Warnfarbe schraffiert sein, beispielsweise in einer abwechselnd schwarz/gelben Schraffur unter einem Winkel von ca. 45° zu der Laufrichtung.

Die Anzahl der Auftritteinrichtungen, die in der erfindungsgemäßen Vorrichtung verbaut ist, hängt von der Breite der von den Förderrollen gebildeten Rollenbahn ab. Die Breite der Rollenbahn kann insbesondere von der Anzahl der Freiräume zwischen den Kufen der zu befördernden Paletten abhängen. Die Rollenbahn soll mit üblichen Schrittweiten eines Menschen bequem überquert werden können. Bei einer für den einreihigen Transport einer Europalette oder einer Halbpalette ausgelegten Rollenbahn (Palettenbreite 800 mm) hat sich herausgestellt, dass die Anordnung von genau zwei Auftritteinrichtungen übliche Schrittweiten für eine bequemes Überqueren der Förderrollen ermöglicht. Bei breiter oder schmaler ausgelegten Rollenbahnen sind selbstverständlich auch mehr als zwei Auftritteinrichtungen oder nur genau eine Auftritteinrichtung denkbar.

Erfindungsgemäß wird auch ein Verfahren zum Befördern von Paletten entlang einer Förderebene in einer Förderrichtung mittels einer Vorrichtung vorgeschlagen, wobei die Vorrichtung mehrere Förderrollen umfasst, welche die Förderebene definieren, und wenigstens eine Auftritteinrichtung mit einer Auftrittfläche zum Betreten durch wenigstens einen Fuß eines Menschen aufweist. Dabei ist die Auftritteinrichtung derart angeordnet, dass sich zumindest die Auftrittfläche oberhalb der Förderebene befindet. Die Auftritteinrichtung ist derart von den Förderrollen beabstandet, dass sie keinen Kontakt mit den Förderrollen hat und dadurch keine reibungsbedingte Bremswirkung auf die Förderrollen ausübt. Darüber hinaus weist die Auftritteinrichtung Abmessungen auf, die so bemessen sind, dass sie zwischen benachbarte Kufen der Palette passt und von der sich in Förderrichtung bewegenden Palette überfahrbar ist.

Das erfindungsgemäße Verfahren umfasst folgende Schritte:
- Bewegen der von Förderrollen getragenen Palette in der Förderrichtung auf die Auftritteinrichtung zu,
- Überfahren der Auftritteinrichtung mit der Palette derart, dass im Rahmen einer Relativbewegung der Auftritteinrichtung relativ zu der Palette oberhalb der Förderebene befindliche Bestandteile der Auftritteinrichtung zwischen benachbarten Kufen der Palette hindurchgeführt werden und die Kufen der Palette in tragendem Kontakt mit den Förderrollen bleiben.

Der Vorteil des erfindungsgemäßen Verfahrens besteht darin, dass die Auftritteinrichtung für das ständige Vorhalten der Möglichkeit des Überquerens der Förderrollen durch Personal permanent an Ort und Stelle der Rollenbahn verbleiben kann. Die Rollenbahn kann jederzeit - sofern die Auftritteinrichtung nicht gerade von einer Palette überfahren wird - ohne zusätzliche, vorbereitende Maßnahmen von dem Personal überquert werden. Die Auftrittfläche steht dem Personal somit - ähnlich wie ein Zebrastreifen einem Fußgänger zum Überqueren einer Straße - zum Überqueren der Rollenbahn dauerhaft zur Verfügung.

Die Drehbewegung der Förderrollen wird durch die Auftritteinrichtung genauso wenig beeinträchtigt (spürbar abgebremst) wie die Förderbewegung der Paletten entlang der Förderebene in der Förderrichtung. Form und Größe der Auftrittfläche können den Sicherheitsanforderungen entsprechend ausgelegt werden.

### c) Ausführungsbeispiel

Nachfolgend wird ein Ausführungsbeispiel der vorliegenden Erfindung beispielhaft anhand der beigefügten Zeichnungen beschrieben. Es zeigen:
- Fig. 1:: eine Aufsicht auf einen Abschnitt eines Ausführungsbeispiels der erfindungsgemäßen Vorrichtung, wobei sich die von den Förderrollen gebildete Rollenbahn in bzw. entgegen der Förderrichtung, d.h. nach rechts bzw. links in Fig. 1, fortsetzt;
- Fig. 2:: eine Schnittansicht entlang Schnitt A-A in Fig. 2;
- Fig. 3:: das Detail D aus Fig. 2 in vergrößerter Darstellung;
- Fig. 4:: eine Aufsicht wie in Fig. 1 mit sich den Auftritteinrichtungen in der Förderrichtung von links annähernder Palette;
- Fig. 5:: eine Aufsicht ähnlich Fig. 4, wobei sich die Palette in Förderrichtung weiter nach rechts bewegt hat und sich etwas mehr als die vordere Hälfte ihres Palettendecks vertikal oberhalb der Auftritteinrichtungen befindet;
- Fig. 6:: eine Aufsicht ähnlich Fig. 5, wobei sich die Palette in Förderrichtung noch weiter nach rechts bewegt hat, sodass sich nur noch etwa die hintere Hälfte ihres Palettendecks vertikal oberhalb der Auftritteinrichtungen befindet;
- Fig. 7:: eine Aufsicht ähnlich Fig. 6, wobei sich die Palette in Förderrichtung so weit nach rechts bewegt hat, dass sich ihr Palettendeck nicht mehr vertikal oberhalb der Auftritteinrichtungen befindet;
- Fig. 8:: eine Fig. 4 entsprechende Aufsicht, wobei das Palettendeck der Palette nicht dargestellt ist, um die Kufen der Palette sehen zu können;
- Fig. 9:: eine Fig. 5 entsprechende Aufsicht, wobei das Palettendeck der Palette nicht dargestellt ist, um die Kufen der Palette sehen zu können;
- Fig. 10:: eine vergrößerte Seitenansicht auf die in Fig. 5 gezeigte Vorrichtung mit Palette in Fig. 5 von unten, wobei der Rahmen und die Treppe aus Gründen der zeichnerischen Klarheit weggelassen wurden;
- Fig. 11:: eine Ansicht auf die in Fig. 5 gezeigte Vorrichtung mit Palette in Fig. 5 von links; und
- Fig. 12:: eine vergrößerte Darstellung ähnlich Fig. 3, wobei ein modifiziertes Ausführungsbeispiel ohne Füllstücke gezeigt ist.

In den Zeichnungen kennzeichnen gleiche Bezugszeichen gleiche Teile bzw. Elemente oder einander funktional entsprechende Teile bzw. Elemente.

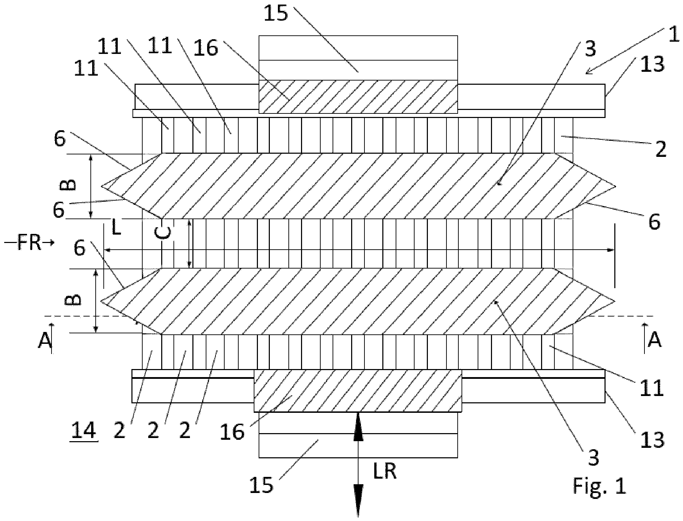

In Fig. 1 ist eine Aufsicht auf einen Abschnitt eines Ausführungsbeispiels einer erfindungsgemäßen Vorrichtung 1 zu sehen. Fig. 1 zeigt denjenigen Abschnitt der Vorrichtung 1, welcher zwei längliche, plattenartige Auftritteinrichtungen 3 im Sinne der vorliegenden Erfindung aufweist. Die Vorrichtung 1 setzt sich in Fig. 1 nach links und rechts fort und bildet eine längere Rollenbahn zum Befördern von beladenen oder unbeladenen Paletten, von welcher nur der Abschnitt mit den Auftritteinrichtungen 3 dargestellt ist.

Die Vorrichtung 1 umfasst eine Vielzahl von zylindrischen Förderrollen 2, von denen in Fig. 1 lediglich 14 Stück gezeigt sind. Die Vorrichtung 1 umfasst des Weiteren einen Rahmen 13, in welchem die Förderrollen 2 drehbar gelagert sind. Je nach Bedarf können zumindest einige der Förderrollen 2 mit Hilfe eines Motors drehend antreibbar sein. Bei reiner Schwerkraftförderung der Paletten ist es ausreichend, dass die Förderrollen 2 lediglich passiv drehbar in dem Rahmen 13 gelagert sind.

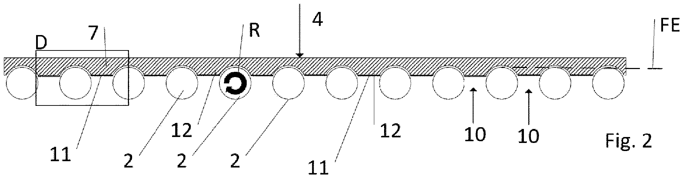

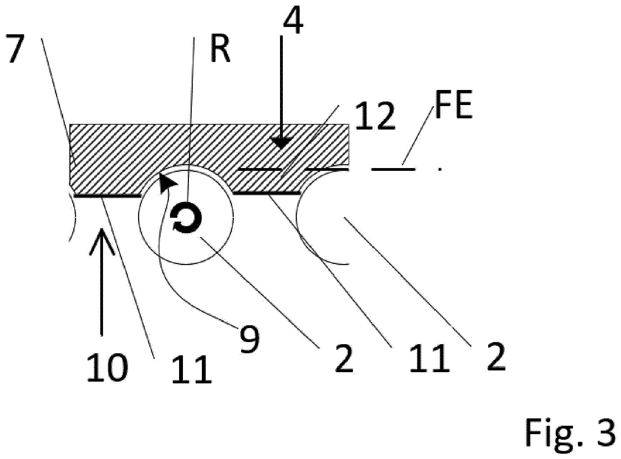

Der Rahmen 13 steht auf einem festen Untergrund 14, beispielsweise einem Hallenboden. Die Förderrollen 2 bilden eine in den Fig. 2 und 3 gekennzeichnete Förderebene FE, die von dem Untergrund 14 beabstandet ist. Die Förderebene FE wird von den mantelerzeugenden Geraden der zylindrischen Förderrollen 2 gebildet, die in den Fig. 2 und 3 im höchsten Punkt des Querschnitts der Förderrollen 2 liegen und in Blickrichtung der Fig. 2 und 3 verlaufen.

Wie in Fig. 1 zu sehen ist, befindet sich bei dem gezeigten Ausführungsbeispiel außerhalb des Rahmens 13, d.h. in Fig. 1 ganz unten bzw. ganz oben, jeweils eine Treppe 15, mit deren Hilfe Personal, das die Vorrichtung 1 überqueren will, bis hinauf zu jeweils einer Rahmentrittfläche 16 steigen kann. Beispielsweise kann ausgehend von der in Fig. 1 unteren Rahmentrittfläche 16 mit insgesamt drei Schritten die in Fig. 1 obere Rahmentrittfläche 16 erreicht werden.

Dabei wird in einem ersten Schritt ein erster Fuß auf die in Fig. 1 untere Auftritteinrichtung 3 gesetzt, dann ein zweiter Fuß auf die in Fig. 1 obere Auftritteinrichtung 3 gesetzt und schließlich der erste Fuß auf die in Fig. 1 obere Rahmentrittfläche 16 gesetzt, bevor der zweite Fuß auf die obere Rahmentrittfläche 16 nachgezogen oder auf die erste Stufe der in Fig. 1 oberen Treppe 15 gesetzt werden kann. Die von den Förderrollen 2 gebildete Rollenbahn kann somit in einer Laufrichtung LR überquert werden, die bei dem gezeigten Ausführungsbeispiel parallel zu den Längsachsen der Förderrollen 2 verläuft, d.h. in Fig. 1 von unten nach oben oder umgekehrt.

Wie in Fig. 1 zu sehen ist, weist das gezeigte Ausführungsbeispiel genau zwei Auftritteinrichtungen 3 auf. Bei der im Ausführungsbeispiel gewählten Breite der Rollenbahn für den einreihigen Transport von Europaletten oder Halbpaletten (halbe Europaletten) mit einer Palettenbreite von 800 mm haben sich zwei Auftritteinrichtungen 3 als vorteilhaft erwiesen, um die Rollenbahn mit bequemer Schrittweite überqueren zu können. Bei dem gezeigten Ausführungsbeispiel weist jede der beiden Auftritteinrichtungen 3 eine längliche Form mit einer Länge L = 1400 mm und einer Breite B = 190 mm auf. Das Verhältnis der Länge L zu der Breite B beträgt hier dementsprechend ca. 7,37.

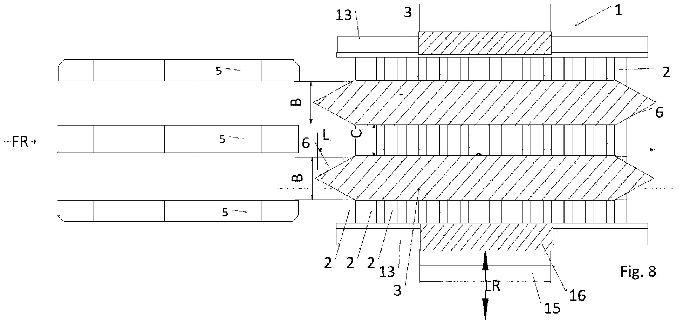

Die Länge L der Auftritteinrichtungen 3 wird wie in Fig. 1 vorzugsweise größer gewählt als die Breite der Treppe 15. Die Breite B der Auftritteinrichtungen 3 hängt von denjenigen zu befördernden Paletten ab, die den kleinsten Abstand benachberter Kufen 5 (vgl. Fig. 8, 9 und 11) aufweisen. Die Breite B wird stets so gewählt, dass sie diesem kleinsten Abstand abzüglich einem ausreichenden Spielpuffer entspricht.

Beispielsweise in der in Fig. 1 gekennzeichneten Förderrichtung FR können Ladungsträger in Form von Paletten, insbesondere Europaletten oder Halbpaletten (halbe Europaletten), in Fig. 1 von links nach rechts auf den Förderrollen 2 transportiert bzw. befördert werden. Dabei bewegt sich die Palette über die beiden Auftritteinrichtungen 3 hinweg, sodass keine Notwendigkeit besteht, die Auftritteinrichtungen 3 für das bestimmungsgemäße Befördern der Paletten auf den Führungsrollen 2 zu entfernen.

Bei dem gezeigten Ausführungsbeispiel weist jede der beiden Auftritteinrichtungen 3 an ihren beiden Enden jeweils geradlinige Führungskanten 6 auf, die geneigt zu der Förderrichtung FR verlaufen. Die Führungskanten 6 dienen als Einfädelhilfen für die Kufen der Paletten für den Fall, dass sich die Kufen nicht vollständig auf Lücke auf die Auftritteinrichtungen 3 zubewegen sollten.

In den Fig. 2 und 3 ist zu erkennen, wie die jeweilige Auftritteinrichtung 3 relativ zu den Führungsrollen 2 angeordnet ist. Die Auftritteinrichtung 3 weist an ihrer Oberseite eine Auftrittfläche 4 zum Betreten durch das Personal auf. Die Auftrittfläche 4 ist vorzugsweise rutschhemmend ausgebildet, beispielsweise mittels rutschhemmender Vorsprünge in Form von Noppen oder dergleichen und/oder in Form einer rutschhemmenden Beschichtung. Wie in den Fig. 2 und 3 zu sehen ist, liegt die Auftrittfläche 4 oberhalb der Förderebene FE, die von den Förderrollen 2 gebildet wird. Dementsprechend können die Füße des die Rollenbahn überquerenden Personals beim Betreten der jeweiligen Auftrittfläche 4 nicht mit den Förderrollen 2 in Berührung kommen. Eine Stolpergefahr durch Hängenbleiben mit den Schuhen an den Förderrollen 2 oder die Gefahr eines Umknickens des Fußgelenks sind damit ausgeschlossen.

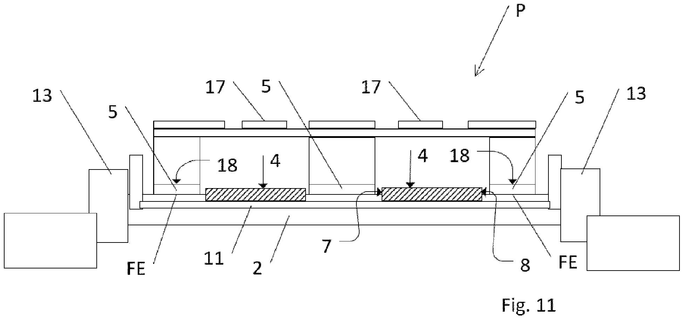

Die Auftritteinrichtungen 3 können beispielsweise als Biegeteile oder als Schweißteile aus Metall gefertigt sein. Der in den Figuren nicht gezeigte Querschnitt der Auftritteinrichtung 3 quer zu der Förderrichtung FR ist bei dem Ausführungsbeispiel im Wesentlichen U-förmig mit nach unten weisender U-Öffnung ausgebildet. Dabei sind die beiden nach unten ragenden U-Schenkel dieses U-Profils verhältnismäßig kurz im Verhältnis zu dem U-Steg, der so lang ist wie die Breite B der Auftritteinrichtung 3. Einer der beiden U-Schenkel ist in den Fig. 2 und 3 als Seitenteil 7 der Auftritteinrichtung 3 zu erkennen. Der andere der beiden U-Schenkel ist als Seitenteil 8 der Auftritteinrichtung 3 in Fig. 11 gekennzeichnet.

Wie in den Fig. 2 und 3 zu sehen ist, weist das Seitenteil 7 der Auftritteinrichtung 3 eine Vielzahl von kreissegmentförmigen Aussparungen 9 auf, wobei jede Aussparung 9 jeweils eine Förderrolle 2 teilweise in sich aufnimmt. Entsprechende Aussparungen sind in dem anderen Seitenteil 8 ausgebildet. Am besten ist in Fig. 3 zu erkennen, dass sich zwischen dem Umfang der jeweiligen Förderrolle 2 und dem Seitenteil 7 ein schmaler, kreisbogenförmiger Luftspalt befindet, der verhindert, dass das Seitenteil 7 bzw. das Seitenteil 8 Kontakt mit den Förderrollen 2 bekommt und dadurch eine reibungsbedingte Bremswirkung auf die Förderrollen 2 ausüben würde. Es ist somit gewährleistet, dass trotz montierter Auftritteinrichtungen 3 ein ungestörtes Rotieren der Förderrollen 2 in einer Rotationsrichtung R (hier im Uhrzeigersinn) möglich ist. Die Förderrollen 2 können sich dementsprechend bestimmungsgemäß drehen und ein prozesssicheres Befördern von Paletten über die Förderrollen 2 hinweg kann stattfinden.

Der in Fig. 3 zu sehende, kreisbogenförmige Luftspalt zwischen der Förderrolle 2 und dem Seitenteil 7 ist vorzugsweise so schmal ausgebildet, dass eine Hand bzw. ein Finger zu groß ist, um durch die Rotation R der Förderrolle 2 in diesen Luftspalt eingezogen zu werden. Gleiches gilt für Gegenstände, die mit der Größe einer Hand bzw. eines Fingers vergleichbare Abmessungen aufweisen.

Wie am besten in den Fig. 2 und 3 zu sehen ist, sind benachbarte Förderrollen 2 voneinander beabstandet, sodass zwischen ihnen ein Zwischenraum 10 vorhanden ist. In diesen Zwischenraum 10 ragen nicht nur die Seitenteile 7 und 8 hinein, sondern es ist bei dem gezeigten Ausführungsbeispiel in dem jeweiligen Zwischenraum 10 ein leistenartiges Füllstück 11 angeordnet, das im Wesentlichen genauso lang ist wie die Förderrollen 2 (vgl. Fig. 1). Die Füllstücke 11 sind an ihren jeweiligen Enden fest mit dem Rahmen 13 verbunden. Alternativ oder zusätzlich ist denkbar, die Füllstücke 11 jeweils fest mit dem Untergrund 14 zu verbinden, beispielsweise mittels geeigneter Stützen, die mit dem Untergrund 14 verschraubt werden.

Wie am besten in Fig. 3 zu sehen ist, weist das Seitenteil 7 zwischen benachbarten Aussparungen 9 jeweils einen Fußbereich 12 auf, der auf dem leistenartigen Füllstück 11 aufsteht und somit die gesamte Auftritteinrichtung 3 auf den Füllstücken 11 abstützt. Entsprechende Fußbereiche weist das andere Seitenteil 8 der Auftritteinrichtung 3 auf.

Die Befestigung der Auftritteinrichtungen 3 kann beispielsweise durch Verschrauben mit wenigstens zwei der Füllstücke 11 erfolgen. Die Auftritteinrichtungen 3 sind dann indirekt über die wenigstens zwei Füllstücke 11 mit dem Rahmen 13 verbunden.

Alternativ ist denkbar, die Auftritteinrichtungen 3 direkt an dem Rahmen 13 zu befestigen, beispielsweise mittels geeigneter Verbindungsgestänge, die sich durch Durchgangslöcher in wenigstens zwei Füllstücken 11 und im Übrigen unterhalb der Förderrollen 2 in Fig. 1 nach oben und/oder unten in Richtung des Rahmens 13 erstrecken.

Weiterhin alternativ ist denkbar, die Auftritteinrichtungen 3 direkt an dem Untergrund 14 zu befestigen, beispielsweise mittels wenigstens zwei längerer Schrauben, welche sich durch Durchgangslöcher in wenigstens zwei Füllstücken 11 erstrecken.

Unabhängig von der gewählten Variante der Befestigung der Auftritteinrichtungen 3 ist bei deren Befestigung darauf zu achten, dass sich die Auftritteinrichtungen 3 angesichts der Belastungen, die durch das Betreten durch das Personal zu erwarten sind, möglichst nicht derart durchbiegen können, dass sie in schleifenden Kontakt mit den Förderrollen 2 kommen können.

Zwischen den in Fig. 3 in deren Blickrichtung verlaufenden, linken und rechten Seitenkanten der Füllstücke 11 und der ihm jeweils benachbarten Förderrolle 2 befindet sich ein geradliniger Luftspalt, der einen bremsenden Reibungskontakt mit der Mantelfläche der jeweiligen Förderrolle 2 verhindert und gleichzeitig so klein ausgebildet ist, dass eine Hand oder ein Finger durch die Rotation R der Förderrolle 2 nicht in diesen Luftspalt eingezogen werden kann. Entsprechendes gilt auch bei diesem Luftspalt für Gegenstände, die mit der Größe einer Hand bzw. eines Fingers vergleichbare Abmessungen aufweisen.

Der innerhalb des U-Profils der jeweiligen Auftritteinrichtung 3 befindliche Hohlraum wird somit - mit Ausnahme der schmalen Luftspalte zwischen den Förderrollen 2 und den Seitenteilen 7 und 8 bzw. zwischen den Förderrollen 2 und den Füllstücken 11 - durch die Förderrollen 2 und die Füllstücke 11 verschlossen. Alternativ ist denkbar, die Auftritteinrichtung 3 nicht als U-Profil herzustellen, sondern stattdessen aus einer Vollplatte zu fertigen, beispielsweise durch Fräsen der kreissegmentförmigen Aussparungen 9. In diesem Fall liegt die jeweilige Auftritteinrichtung 3 nicht mit stegartigen Seitenteilen 7 und 8, sondern vollflächig von oben auf den Füllstücken 11 auf.

Abweichend von den Fig. 1 bis 3 ist denkbar, die Füllstücke 11 zwischen den Förderrollen 2 wegzulassen. In diesem Fall können die Fußbereiche 12 der Seitenteile 7 und 8 nicht mehr auf Füllstücken 11 aufstehen. Die Befestigung der Auftritteinrichtungen 3 kann in diesem Fall entweder direkt an dem Rahmen 13 oder direkt an dem Untergrund 14 erfolgen.

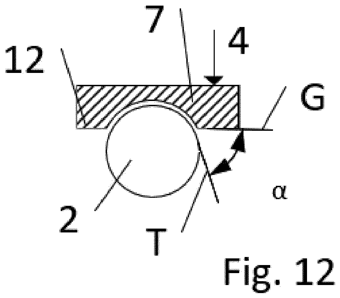

Bei der Gestaltung ohne Füllstücke 11 ist das Entstehen einer gefährlichen Einzugstelle zu vermeiden, an welcher eine Hand bzw. deren Finger eingezogen und gequetscht werden könnte bzw. könnten. Zu diesem Zweck wird der in Fig. 12 eingezeichnete Winkel α zwischen einer Tangente T an den Querschnittskreis einer Förderrolle 2 und einer in der Zeichenebene der Fig. 12 liegenden Geraden G, die sich ausgehend von einem Ende des kreisbogenförmigen Luftspalts, der sich zwischen der Förderrolle 2 und dem Seitenteil 7 befindet, in Fig. 12 horizontal entlang der Unterseite eines Fußbereichs 12 des Seitenteils 7 erstreckt, so gewählt, dass er mindestens 80° beträgt. Diese Geometrie ist in Fig. 12 spiegelsymmetrisch auf der linken und auf der rechten Seite der Förderrolle 2 vorhanden, um eine Einzugstelle sowohl bei Rotation der Förderrolle 2 im Uhrzeigersinn als auch bei Rotation der Förderrolle 2 im Gegenuhrzeigersinn zu vermeiden.

Verläuft die Unterseite des Fußbereichs 12 nicht wie in Fig. 12 geradlinig, so wird die vorgenannte Gerade G durch eine Tangente ersetzt, die an den Ausgangspunkt der dann gekrümmt verlaufenden Unterseite des Fußbereichs an dem in Fig. 12 rechten Ende des kreisbogenförmigen Luftspalts angelegt wird.

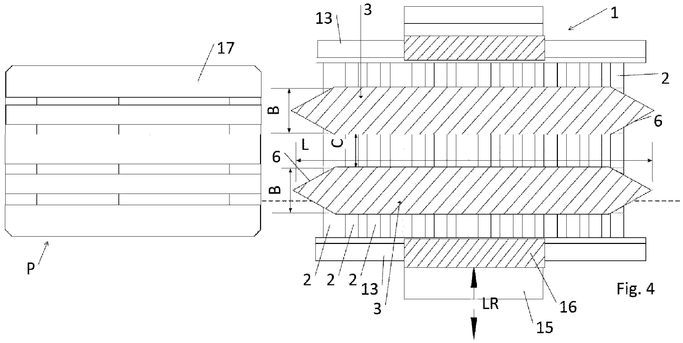

Die Fig. 4 bis 7 illustrieren, wie eine Palette P in Förderrichtung FR entlang der Förderebene FE gefördert wird und dabei die beiden Auftritteinrichtungen 3 prozesssicher überfährt. Das Palettendeck 17 der Palette P befindet sich während des Überfahrens der Auftritteinrichtungen 3 dementsprechend oberhalb der Auftritteinrichtungen 3.

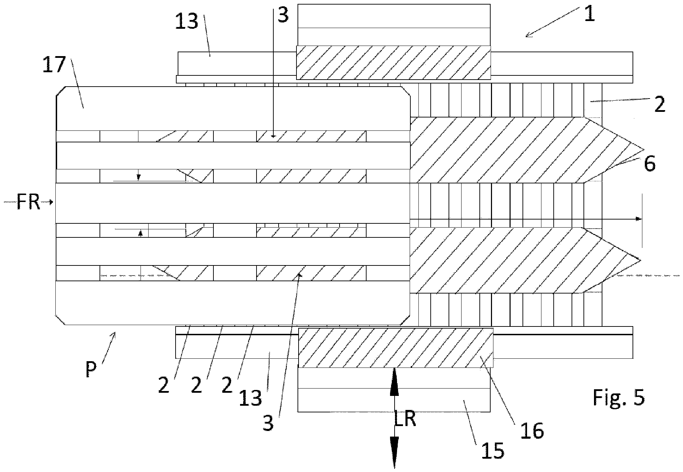

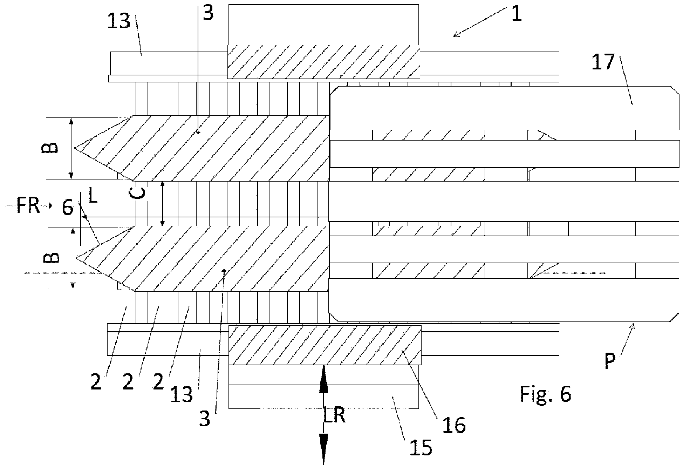

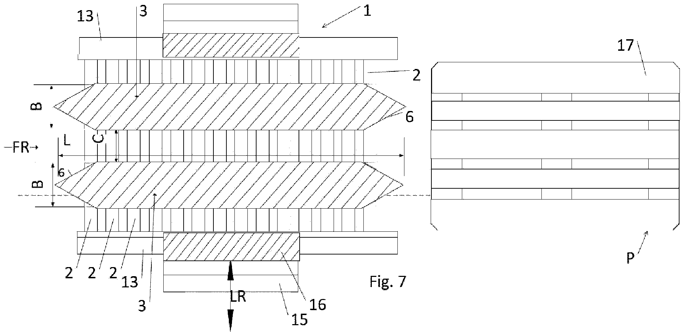

Fig. 4 zeigt die Palette P in Förderrichtung FR kurz vor den Auftritteinrichtungen 3. In Fig. 5 hat die Palette P mit etwas mehr als ihrer in Förderrichtung FR vorderen Hälfte die Auftritteinrichtungen 3 erreicht. In Fig. 6 hat die in Förderrichtung FR vordere Hälfte der Palette P die Auftritteinrichtungen 3 bereits wieder verlassen. In Fig. 7 ist die Palette P in derjenigen Position gezeigt, in welcher sie die beiden Auftritteinrichtungen 3 vollständig überfahren hat.

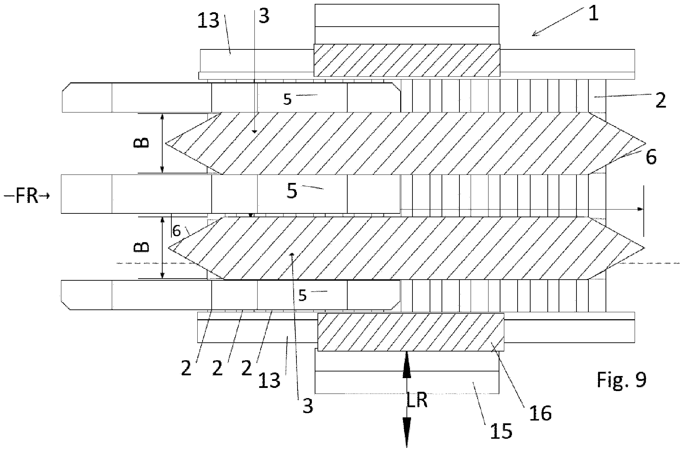

Die Fig. 8 und 9 illustrieren die Bewegungspositionen der Palette P aus den Fig. 4 und 5, wobei das Palettendeck 17 zeichnerisch weggelassen wurde, um die drei Kufen 5 der Palette P besser sehen zu können. Wie zu erkennen ist, ist die Breite B der jeweiligen Auftritteinrichtung 3 derart ausgelegt, dass sie mit ausreichendem Spiel zwischen zwei benachbarte Kufen 5 der Palette P passt. Diese Ausgestaltung ermöglicht es erfindungsgemäß, die Auftritteinrichtungen 3 dauerhaft an der Vorrichtung 1 derart montiert zu lassen, dass die Auftrittflächen 4 oberhalb der von den Förderrollen 2 gebildeten Förderebene FE zu liegen kommen.

Sollte sich die Palette P in Fig. 4 bzw. in Fig. 8 relativ zu der gezeigten Palettenposition mit einem gewissen Versatz nach oben oder unten in Förderrichtung FR auf die Auftritteinrichtungen 3 zu bewegen, so schlagen die Kufen 5 mit ihren in Förderrichtung FR vorderen Enden an den in den Figuren an den linken Enden der Auftritteinrichtungen 3 befindlichen Führungskanten 6 an und richten sich dadurch derart aus, dass die Auftritteinrichtungen 3 zwischen die Kufen 5 gelangen können. Es wird somit stets die in Fig. 5 bzw. Fig. 9 gezeigte Relativposition zwischen der Palette P bzw. den Kufen 5 einerseits und den Auftritteinrichtungen 3 andererseits erreicht.

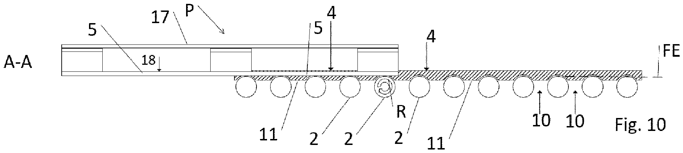

In Fig. 10 ist eine Seitenansicht der in Fig. 5 gezeigten Palettenposition dargestellt, wobei der Rahmen 13 und die Treppe 15 zur besseren zeichnerischen Klarheit weggelassen wurde. Es ist zu erkennen, dass bei dem gezeigten Ausführungsbeispiel die Auftrittfläche 4 der jeweiligen Auftritteinrichtung 3 einen größeren Abstand von der Förderebene FE aufweist als die Oberseite 18 der Kufen 5 der Palette P. Mit anderen Worten ausgedrückt, ist bei dem gezeigten Ausführungsbeispiel die vertikal gemessene Dicke der Kufen 5 kleiner als der Abstand der Auftrittfläche 4 von der Förderebene FE. Diese Ausgestaltung ist vorteilhaft, weil sie im Falle eines etwaigen Auflaufens der in Förderrichtung FR vorderen Enden der Kufen 5 auf die Führungskanten 6 einem Aufspringen der Palette P nach oben auf die Auftrittflächen 4 entgegenwirkt und dadurch dafür sorgt, dass die Palette P sicher so eingefädelt wird, dass die Auftritteinrichtungen 3 zwischen den Kufen 5 aufgenommen werden.

In Fig. 11 ist eine Ansicht der in Fig. 4 gezeigten Vorrichtung 1 und Palette P in Förderrichtung FR von links dargestellt. In dieser Ansicht fällt die am weitesten oben liegende, mantelerzeugende Gerade der Förderrolle 2 zeichnerisch mit der Förderebene FE zusammen. Wie zu erkennen ist, haben die Kufen 5 während des Transports der Palette P über die Auftritteinrichtungen 3 hinweg tragenden Kontakt mit den Förderrollen 2.

Abweichend von Fig. 10 ist in Fig. 11 eine Alternative der Relativlage der Auftrittflächen 4 relativ zu den Oberseiten 18 der Kufen 5 dargestellt. Der Abstand der Auftrittfläche 4 von der Förderebene FE ist in Fig. 11 kleiner als der Abstand der Oberseiten 18 der Kufen 5 von der Förderebene FE. Dies kann sich bei Verwendung verschiedenartiger Typen von Paletten P ergeben.

Die Erfindung betrifft eine Vorrichtung zum Befördern von Paletten entlang einer Förderebene in einer Förderrichtung, wobei die Vorrichtung mehrere Förderrollen umfasst, welche die Förderebene definieren, die Vorrichtung wenigstens eine Auftritteinrichtung mit einer Auftrittfläche zum Betreten durch wenigstens einen Fuß eines Menschen aufweist, und die Auftritteinrichtung derart angeordnet ist, dass sich zumindest die Auftrittfläche oberhalb der Förderebene befindet. Die Auftritteinrichtung ist derart von den Förderrollen beabstandet, dass sie keinen Kontakt mit den Förderrollen hat und dadurch keine reibungsbedingte Bremswirkung auf die Förderrollen ausübt. Die Auftritteinrichtung weist Abmessungen auf, die so bemessen sind, dass sie zwischen benachbarte Kufen der Palette passt und von der sich in Förderrichtung bewegenden Palette überfahrbar ist.

### BEZUGSZEICHENLISTE

- 1: Vorrichtung
- 2: Förderrolle
- 3: Auftritteinrichtung
- 4: Auftrittfläche der Auftritteinrichtung 3
- 5: Kufe der Palette P
- 6: Führungskante der Auftritteinrichtung 3
- 7: Seitenteil der Auftritteinrichtung 3
- 8: Seitenteil der Auftritteinrichtung 3
- 9: Aussparung in Seitenteil 7
- 10: Zwischenraum zwischen benachbarten Förderrollen 2
- 11: Füllstück
- 12: Fußbereich des Seitenteils 7
- 13: Rahmen
- 14: Untergrund
- 15: Treppe
- 16: Rahmentrittfläche
- 17: Palettendeck der Palette P
- 18: Oberseite der Kufe 5

- α: Winkel zwischen T und G
- B: Breite der Auftritteinrichtung 3
- FE: Förderebene der Vorrichtung 1
- FR: Förderrichtung der Palette P
- G: Gerade an der Unterseite des Fußbereiches 12
- L: Länge der Auftritteinrichtung 3
- LR: Laufrichtung zum Überqueren der Rollenbahn
- P: Palette
- R: Rotationsrichtung der Förderrollen 2
- T: Tangente an die Förderrolle 2

## Patentansprüche

1. Vorrichtung zum Befördern von Paletten (P) entlang einer Förderebene (FE) in einer Förderrichtung (FR), wobei
• die Vorrichtung (1) mehrere Förderrollen (2) umfasst, welche die Förderebene (FE) definieren,
• die Vorrichtung (1) wenigstens eine Auftritteinrichtung (3) mit einer Auftrittfläche (4) zum Betreten durch wenigstens einen Fuß eines Menschen aufweist, und
• die Auftritteinrichtung (3) derart angeordnet ist, dass sich zumindest die Auftrittfläche (4) oberhalb der Förderebene (FE) befindet,
**dadurch gekennzeichnet, dass**
• die Auftritteinrichtung (3) derart von den Förderrollen (2) beabstandet ist, dass sie keinen Kontakt mit den Förderrollen (2) hat und dadurch keine reibungsbedingte Bremswirkung auf die Förderrollen (2) ausübt, und
• die Auftritteinrichtung (3) Abmessungen aufweist, die so bemessen sind, dass sie zwischen benachbarte Kufen (5) der Palette (P) passt und von der sich in Förderrichtung (FR) bewegenden Palette (P) überfahrbar ist.

2. Vorrichtung nach Anspruch 1,
**dadurch gekennzeichnet, dass**
die Auftrittfläche (4) eine längliche Form aufweist.

3. Vorrichtung nach Anspruch 2,
**dadurch gekennzeichnet, dass**
die längliche Form eine in Förderrichtung (FR) gemessenen Länge (L) und eine quer zu der Förderrichtung (FR) gemessene Breite (B) aufweist, wobei das Verhältnis der Länge (L) zu der Breite (B) gleich oder größer 3 ist.

4. Vorrichtung nach einem der vorangehenden Ansprüche,
**dadurch gekennzeichnet, dass**
die Auftritteinrichtung (3) zumindest in demjenigen Bereich, welcher einer sich ihr nähernden Palette (P) zugewandt ist, zu der Förderrichtung (FR) geneigte Führungskanten (6) aufweist, die als Einfädelhilfe für die Kufen (5) der Palette (P) dienen.

5. Vorrichtung nach einem der vorangehenden Ansprüche,
**dadurch gekennzeichnet, dass**
die Auftritteinrichtung (3) an ihren beiden, in Förderrichtung (FR) verlaufenden Seitenrändern jeweils ein Seitenteil (7, 8) umfasst, welches von der Auftrittfläche (4) abgewandt in Richtung der Förderrollen (2) ragt und mehrere kreissegmentförmige Aussparungen (9) aufweist, welche dazu ausgelegt sind, jeweils eine Förderrolle (2) kontaktlos und teilweise derart aufzunehmen, dass einem versehentlichen Einziehen einer Hand oder eines Fingers und einem Einziehen von Gegenständen zwischen die Seitenteile (7, 8) und die Förderrollen (2) entgegengewirkt wird.

6. Vorrichtung nach einem der vorangehenden Ansprüche,
**dadurch gekennzeichnet, dass**
jeweils zwischen benachbarten Förderrollen (2) ein Zwischenraum (10) vorhanden ist, in welchem unterhalb der Förderebene ein leistenartiges Füllstück (11) ohne Kontakt mit den Förderrollen (2) angeordnet ist, welches den Zwischenraum (10) im Wesentlichen verschließt.

7. Vorrichtung nach Anspruch 6 in Verbindung mit Anspruch 5,
**dadurch gekennzeichnet, dass**
jeweils ein zwischen benachbarten Aussparungen (9) der Seitenteile (7, 8) befindlicher Fußbereich (12) der Seitenteile (7, 8) auf dem jeweiligen Füllstück (11) aufsteht.

8. Vorrichtung nach einem der vorangehenden Ansprüche,
**dadurch gekennzeichnet, dass**
die Vorrichtung (1) einen die Förderrollen (2) tragenden Rahmen (13) aufweist, wobei die Auftritteinrichtung (3) an dem Rahmen (13) befestigt ist.

9. Vorrichtung nach Anspruch 8 in Verbindung mit Anspruch 7 oder Anspruch 6,
**dadurch gekennzeichnet, dass**
die Füllstücke (11) an dem Rahmen (13) befestigt sind und die Auftritteinrichtung (3) an wenigstens zwei Füllstücken (11) befestigt ist, so dass die Auftritteinrichtung (3) indirekt an dem Rahmen (13) befestigt ist.

10. Vorrichtung nach einem der Ansprüche 1 bis 7,
**dadurch gekennzeichnet, dass**
die Vorrichtung (1) auf einem Untergrund (14) aufstellbar und die Auftritteinrichtung (3) direkt an dem Untergrund befestigbar ist.

11. Vorrichtung nach einem der vorangehenden Ansprüche,
**dadurch gekennzeichnet, dass**
die Auftrittfläche (4) rutschhemmende Vorsprünge aufweist.

12. Vorrichtung nach einem der vorangehenden Ansprüche,
**dadurch gekennzeichnet, dass**
die Auftrittfläche (4) eine rutschhemmende Beschichtung aufweist.

13. Vorrichtung nach einem der vorangehenden Ansprüche,
**dadurch gekennzeichnet, dass**
die Auftrittfläche (4) schräg zu einer Laufrichtung (LR), in welcher sie überschritten wird, in einer Warnfarbe schraffiert ist.

14. Vorrichtung nach einem der vorangehenden Ansprüche,
**dadurch gekennzeichnet, dass**
die Vorrichtung (1) genau zwei Auftritteinrichtungen (3) aufweist.

15. Verfahren zum Befördern von Paletten (P) entlang einer Förderebene (FE) in einer Förderrichtung (FR) mittels einer Vorrichtung (1), die
• mehrere Förderrollen (2) umfasst, welche die Förderebene (FE) definieren, und
• wenigstens eine Auftritteinrichtung (3) mit einer Auftrittfläche (4) zum Betreten durch wenigstens einen Fuß eines Menschen aufweist,
wobei
• die Auftritteinrichtung (3) derart angeordnet ist, dass sich zumindest die Auftrittfläche (4) oberhalb der Förderebene (FE) befindet,
• die Auftritteinrichtung (3) derart von den Förderrollen (2) beabstandet ist, dass sie keinen Kontakt mit den Förderrollen (2) hat und dadurch keine reibungsbedingte Bremswirkung auf die Förderrollen (2) ausübt, und
• die Auftritteinrichtung (3) Abmessungen aufweist, die so bemessen sind, dass sie zwischen benachbarte Kufen (5) der Palette (P) passt und von der sich in Förderrichtung (FR) bewegenden Palette (P) überfahrbar ist,
wobei das Verfahren folgende Schritte umfasst:
• Bewegen der von Förderrollen (2) getragenen Palette (P) in der Förderrichtung (FR) auf die Auftritteinrichtung (3) zu,
• Überfahren der Auftritteinrichtung (3) mit der Palette (P) derart, dass im Rahmen einer Relativbewegung der Auftritteinrichtung (3) relativ zu der Palette (P) oberhalb der Förderebene (FE) befindliche Bestandteile der Auftritteinrichtung (3) zwischen benachbarten Kufen (5) der Palette (P) hindurchgeführt werden und die Kufen (5) der Palette (P) in tragendem Kontakt mit den Förderrollen (2) bleiben.

## Geänderte Patentansprüche

### Geänderte Patentansprüche gemäss Regel 137(2) EPÜ.

**1.** Vorrichtung zum Befördern von Paletten (P) entlang einer Förderebene (FE) in einer Förderrichtung (FR), wobei
• die Vorrichtung (1) mehrere Förderrollen (2) umfasst, welche eine Rollenbahn bilden und die Förderebene (FE) definieren,
• die Vorrichtung (1) wenigstens eine Auftritteinrichtung (3) mit einer Auftrittfläche (4) zum Betreten durch wenigstens einen Fuß eines Menschen aufweist, und
• die Auftritteinrichtung (3) derart angeordnet ist, dass sich zumindest die Auftrittfläche (4) oberhalb der Rollenbahn und der Förderebene (FE) befindet,
• die Auftritteinrichtung (3) derart von den Förderrollen (2) beabstandet ist, dass sie keinen Kontakt mit den Förderrollen (2) hat und dadurch keine reibungsbedingte Bremswirkung auf die Förderrollen (2) ausübt, und
• die Auftritteinrichtung (3) Abmessungen aufweist, die so bemessen sind, dass sie zwischen benachbarte Kufen (5) der Palette (P) passt und von der sich in Förderrichtung (FR) bewegenden Palette (P) überfahrbar ist.

**15.** Verfahren zum Befördern von Paletten (P) entlang einer Förderebene (FE) in einer Förderrichtung (FR) mittels einer Vorrichtung (1), die
• mehrere Förderrollen (2) umfasst, welche eine Rollenbahn bilden und die Förderebene (FE) definieren, und
• wenigstens eine Auftritteinrichtung (3) mit einer Auftrittfläche (4) zum Betreten durch wenigstens einen Fuß eines Menschen aufweist, wobei
• die Auftritteinrichtung (3) derart angeordnet ist, dass sich zumindest die Auftrittfläche (4) oberhalb der Rollenbahn und der Förderebene (FE) befindet,
• die Auftritteinrichtung (3) derart von den Förderrollen (2) beabstandet ist, dass sie keinen Kontakt mit den Förderrollen (2) hat und dadurch keine reibungsbedingte Bremswirkung auf die Förderrollen (2) ausübt, und
• die Auftritteinrichtung (3) Abmessungen aufweist, die so bemessen sind, dass sie zwischen benachbarte Kufen (5) der Palette (P) passt und von der sich in Förderrichtung (FR) bewegenden Palette (P) überfahrbar ist,
wobei das Verfahren folgende Schritte umfasst:
• Bewegen der von Förderrollen (2) getragenen Palette (P) in der Förderrichtung (FR) auf die Auftritteinrichtung (3) zu,
• Überfahren der Auftritteinrichtung (3) mit der Palette (P) derart, dass im Rahmen einer Relativbewegung der Auftritteinrichtung (3) relativ zu der Palette (P) oberhalb der Rollenbahn und der Förderebene (FE) befindliche Bestandteile der Auftritteinrichtung (3) zwischen benachbarten Kufen (5) der Palette (P) hindurchgeführt werden und die Kufen (5) der Palette (P) in tragendem Kontakt mit den Förderrollen (2) bleiben.
